# EUROPEAN PATENT APPLICATION

(11) **EP 4 835 692 A1**
(43) Date of publication of application: **04.11.2026**
(21) Application number: 26175744.7
(22) Date of filing: 30.04.2026
(51) Int. Cl.: G06F 16/9032

(54) **ARTIFICIAL INTELLIGENCE (AI)-BASED TECHNIQUES FOR CONTENT GENERATION AND MODIFICATION**

(30) Priority: 30.04.2025 US 202519195154
(71) Applicant: Google LLC, Mountain View, CA 94043 (US)
(72) Inventor: SHAIMAN, Todd, Denver (US); ROWE, Joshua, Boulder (US); HONG, Min Ji, San Francisco (US); VERTIERRA, Karen Angeli, Mission Viejo (US); PAWLE, Benjamin Guy Alexander, Cumbria (GB); COLVILLE, Michael, London (GB); RICKERBY, George Joseph, London (GB)
(74) Representative: Derry, Paul Stefan

(57) **Abstract**

Methods and systems for artificial intelligence (Al)-based techniques for content generation and modification. A user query including a request to generate content in accordance with a content concept is received. A prompt for an AI model trained to perform operations associated with content generation is generated based on the received query. The prompt includes an expanded version of the request to generate the content in accordance with the content concept. The generated prompt is provided as an input to the AI model. An output of the AI model is obtained, the output including content item(s) generated based on the expanded version of the request in accordance with the generated prompt and further based on existing content of electronic document(s) associated with a user associated with the user query and/or the content concept. A user interface (UI) of a client device is updated to include the content item(s).

## Description

### TECHNICAL FIELD

Aspects and implementations of the present disclosure relate to methods and systems for AI-based techniques for content generation and modification.

### BACKGROUND

A collaborative document platform can provide tools and functionalities that enable users to create and/or customize content, such as text content, image content, video content, audio content, and so forth.

### SUMMARY

The summary below is a simplified summary of the disclosure in order to provide a basic understanding of some aspects of the disclosure. This summary is not an extensive overview of the disclosure. It is intended neither to identify key or critical elements of the disclosure, nor to delineate any scope of the particular implementations of the disclosure or any scope of the claims. Its sole purpose is to present some concepts of the disclosure in a simplified form as a prelude to the more detailed description that is presented later.

An aspect of the disclosure provides a computer-implemented method that includes receiving, by a set of one or more processing devices, a user query including a request to generate content in accordance with a content concept. The method further includes generating, by the set of one or more processing devices and based on the received user query, a prompt for an artificial intelligence (AI) model that is trained to perform operations associated with content generation. The prompt includes an expanded version of the request to generate the content in accordance with the content concept. The method further includes providing, by the set of one or more processing devices, the generated prompt as an input to the AI model. The method further includes obtaining, by the set of one or more processing devices, an output of the AI model. The output of the AI model includes a set of one or more content items generated based on the expanded version of the request in accordance with the generated prompt and further based on existing content of one or more electronic documents associated with at least one of a user associated with the user query or the content concept. The method further includes updating, by the set of one or more processing devices, a user interface (UI) of a client device associated with the user to include the set of one or more content items.

In some implementations, each respective content item of the set of content items corresponds to a distinct content type. The prompt further includes one or more instructions to perform operations associated with generating a respective content item having the corresponding distinct content type.

In some implementations, the method further includes receiving an additional user query including a request to modify one or more aspects of at least one content item of the set of content items. The method further includes obtaining an updated version of the at least one content item that include the requested modification to the one or more aspects. The method further includes updating the UI of the client device to include the updated version of the at least one content item and one or more UI elements that enable the user to specify further modifications to the one or more aspects of the at least one content item.

In some implementations, the UI of the client device is further updated to indicate the existing content of the one or more electronic documents for which the set of content items was generated.

In some implementations, the method further includes providing an indication of the one or more electronic documents as an additional input to the AI model.

In some implementations, the method further includes receiving an indication of the one or more electronic documents based on a user interaction of the UI of the client device.

In some implementations, the method further includes parsing a set of electronic documents associated with the user, the set of electronic documents including the one or more electronic documents. The method further includes based on the parsing, determining that the one or more electronic documents include the existing content, the existing content corresponding to the content concept.

In some implementations, generating the prompt for the AI model includes providing an indication of the content concept as an input to an additional AI model that is trained to predict a content type of a content item corresponding to the content concept. The method further includes obtaining one or more outputs of the additional AI model, the one or more outputs including an indication of the content type of the content item corresponding to the content concept. The method further includes updating the prompt to include an instruction to generate the content item. The set of content items comprises the content item having the content type.

In some implementations, the set of content items include at least one of a text content item, an image content item, an audio content item, an animation content item, or a video content item.

### BRIEF DESCRIPTION OF THE DRAWINGS

Aspects and implementations of the present disclosure will be understood more fully from the detailed description given below and from the accompanying drawings of various aspects and implementations of the disclosure, which, however, should not be taken to limit the disclosure to the specific aspects or implementations, but are for explanation and understanding only.
**FIG. 1** illustrates an example system architecture, in accordance with implementations of the present disclosure.
**FIG. 2** is a block diagram of an example platform, an example predictive system, and an example content engine, in accordance with implementations of the present disclosure.
**FIG. 3** depicts a flow diagram of an example method for generation of content using artificial intelligence (AI), in accordance with implementations of the present disclosure.
**FIG. 4** depicts a block diagram of example of generating content using AI, in accordance with implementations of the present disclosure.
**FIGs. 5A-5B** illustrate example user interfaces (UIs), in accordance with implementations of the present disclosure.
**FIG. 6** depicts a flow diagram of an example method for modification of content using artificial intelligence (AI), in accordance with implementations of the present disclosure.
**FIG. 7** illustrates an example predictive system, in accordance with implementations of the present disclosure.
**FIG. 8** is a block diagram illustrating an exemplary computer system, in accordance with implementations of the present disclosure.

### DETAILED DESCRIPTION

Aspects of the present disclosure relate to artificial intelligence (AI)-based techniques for content generation and modification. A platform, such as a collaborative content platform, can provide users with access to tools or functionalities that enable the users to create and/or customize content, such as text content, image content, video content, audio content, and so forth. For example, a platform can provide users with access to tools or functionalities that enable users to create and/or customize content for inclusion in social media campaigns, presentations, or other types of electronic documents or files.

As indicated above, users may access tools or functionalities of the platform to create or customize content that is engaging to particular audiences. In an illustrative example, a user associated with a decaf coffee company may access such tools or functionalities to create content that is engaging to the company's current customer base (e.g., an audience that enjoys drinking decaf coffee) as well as potential customers (e.g., an audience that may not yet enjoy drinking decaf coffee). It can take a significant amount of time and resources for a user to manually create, using the tools of the platform, multiple content items that are appealing and relevant to each type of audience. The manual creation of such content items may include the creation and/or identification of content items that are relevant to each respective audience, which can involve significant trial and error. Such trial and error can consume a significant amount of computing resources (e.g., processing cycles, memory space, network bandwidth, etc.) of the platform and/or a client device of the user, and such computing resources may be unavailable to other processes, therefore increasing the overall latency and decreasing the overall efficiency of the system. Further, the manual creation of content items is not easily scalable, and as the demand for content for different audiences increases, the time and resources consumed to create such content also increases.

Some systems provide users with access to AI-based tools or functionalities that are trained or otherwise configured to generate content based on a prompt. For example, a user can provide a user query indicating a type of content item to be generated and characteristics of the content item. A prompt associated with the user query can be fed to an AI model (e.g., a large language model (LLM)) and the output(s) of the AI model can include a generated content item. As conventional LLMs are trained using a large corpus of data that encompasses a wide range of data types and topics, the content item generated by the LLM may reflect characteristics that correspond to the data of the training corpus and may not have the requested characteristics included in the user query. Accordingly, the user may provide multiple additional user queries to the LLM in an attempt to cause the LLM to generate a content item having the requested characteristics, which causes a system to run the LLM on corresponding prompts multiple times. Running a LLM on a single prompt can consume a large amount of computing resources, which can be significantly increased when the LLM is run on multiple prompts. Such computing resources are further unavailable to other processes, which can further increase the overall latency and decrease the overall efficiency of the system.

Implementations of the present disclosure address the above and other deficiencies by providing methods and systems for AI-based techniques for content generation and modification. A user can provide (e.g., via a user interface (UI) of a client device) a query including a request for content (e.g., including one or more content items) in accordance with a content concept. A content concept refers to a high-level idea that provides context and direction for one or more content items (e.g., a text content item, an image content item, a video content item, an audio content item, etc.). The content concept, as specified by the user query, can include one or more of a topic or subject matter for the content, an intended format or medium for the content, a target audience of the content, a purpose or goal of the content, a style, tone, or voice of the content, keywords, phrases, or specific elements of the content, constraints or exclusions of the concept, and so forth. The user query may or may not specify or otherwise indicate a type of the content item(s).

The system can generate a prompt for an AI model based on the user query, in some embodiments. The AI model may be trained to perform operations associated with content generation and/or content modification. Such operations can include, but are not limited to, content ideation (e.g., generating content ideas), topic expansion or structuring (e.g., breaking down a content concept into subtopics or an outline structure), content generation, style or tone adjustment, content format transformation, content summarization, content personalization, content localization or translation, content tagging and categorization, and so forth. The prompt can include an expanded version of the request to generate the content in accordance with the content concept. In an illustrative example, the user query can include a request for content items to be used in a social media campaign for a decaf coffee company. The prompt generated based on the user query can indicate or otherwise specify a type of one or more content items that are to be generated, a purpose or goal associated with each content item, a style or format associated with each content item, and so forth.

In some embodiments, the system can generate the prompt for the AI model by providing the user query as an input to one or more additional AI models that are trained to obtain or otherwise determine data or information pertaining to a given user query. In an illustrative example, the system can provide the user query (or information of the user query) as an input to an intent model trained to predict an intent associated with the request of the user query, a tactics model to predict a tactic or strategy associated with the content to be generated in accordance with the request, a design model to predict a design or style associated with the content to be generated, and so forth. Each model described above may be trained on a large corpus of data or metadata corresponding to content items associated with other users (e.g., created manually or generated by one or more AI models), in some embodiments. In other or similar embodiments, each model may be trained based on a training data set associated with the user that provided the user query. Further details regarding training such models are provided herein. The system can obtain one or more outputs of the additional AI models, which can include a predicted intent associated with the user query, a predicted tactic or strategy associated with the content, a predicted design or style associated with the content, and so forth. The system can generate a prompt for the AI model based on the data or information included in the output(s) of the additional AI models. In accordance with the previous illustrative example, the prompt can indicate two or more content items that are to be generated in response to the request of the user query including the request for content items to be used in a social media campaign for the decaf coffee company. The two or more content items can include a text content item and/or an image content item for a social media post, an audio content item describing a new product offering of the decaf coffee company for use in a podcast, and so forth.

The system can provide the generated prompt as an input to the AI model and obtain one or more outputs that include a set of one or more content items that are generated based on the expanded version of the request in accordance with the prompt. The content item(s) may be further based on existing content of one or more electronic documents associated with the user and/or the content concept. In some embodiments, the AI model can retrieve the content of the electronic documents and generate the content items based on the retrieved content, as described herein. In other or similar embodiments, the system can identify the existing content of the electronic documents that is relevant to the content concept and provide the existing content as an additional input to the AI model (e.g., with the prompt). In accordance with the previous illustrative example, the existing content can be a product launch schedule, branding elements, etc. associated with products of the decaf coffee company that are included in electronic documents (e.g., word documents, spreadsheet documents, slide presentation documents, calendar event documents, etc.) associated with the user and/or the decaf coffee company. The generated content items can include information or characteristics in accordance with such existing content.

The system can update a user interface (UI) of a client device of the user to include the set of content items generated by the AI model. In some embodiments, the UI can include one or more UI elements that enable the user to request a modification to the content items. The UI elements can, in some embodiments, indicate or otherwise reflect characteristics of the generated content item(s) and can enable the user to request an increase or a decrease in a presence of the characteristics, in some embodiments. In accordance with the illustrative example, at least one of the content items generated by the AI model can include text content and/or image content associated with a new decaf coffee product. A characteristic of the content items can include a sales approach or persuasion style. A UI element of the UI can include a slider bar element that enables the user to request an increase or decrease in the presence of the persuasion style (e.g., from a "soft sell" to a "hard sell"). Upon receiving a request from a user to modify the content items, the system can provide an updated prompt as an input to the AI model based on the request and obtain one or more outputs of the AI model, which includes the modified content item(s) in accordance with the modification.

Aspects of the present disclosure provide techniques for AI-based techniques for generating and modifying customized content. A user can provide a user query that aligns with a particular concept, which can include a high level description of the content concept that omits specific information, such as content type or design. As described herein, the system can automatically generate a prompt that expands on the request, incorporating a predicted intent, strategy, and/or design elements. Using this generated prompt as input to the AI model, the system can produce content that reflects the characteristics of the prompt and/or existing content of electronic documents associated with the user and/or the content concept. This allows users to obtain custom content that matches their desired concept without manual creation or trial and error with an AI model trained using a large, varied dataset. Accordingly, fewer computing resources (e.g., processing cycles, memory space, network bandwidth, etc.) are consumed by the system to obtain the customized content items, and more computing resources are available to other processes, which improves an overall efficiency and an overall latency of the system.

In addition, embodiments of the present disclosure provide for the automatic generation of a prompt that causes an AI model to generate customized content items in a smaller amount of time and/or using a smaller number of computing resources. Accordingly, in some embodiments, the automatically generated prompt described herein may enable the AI model to operate efficiently and with such few computing resources (e.g., memory space, etc.) that the AI model be executed via a client device (e.g., a mobile device, etc.).

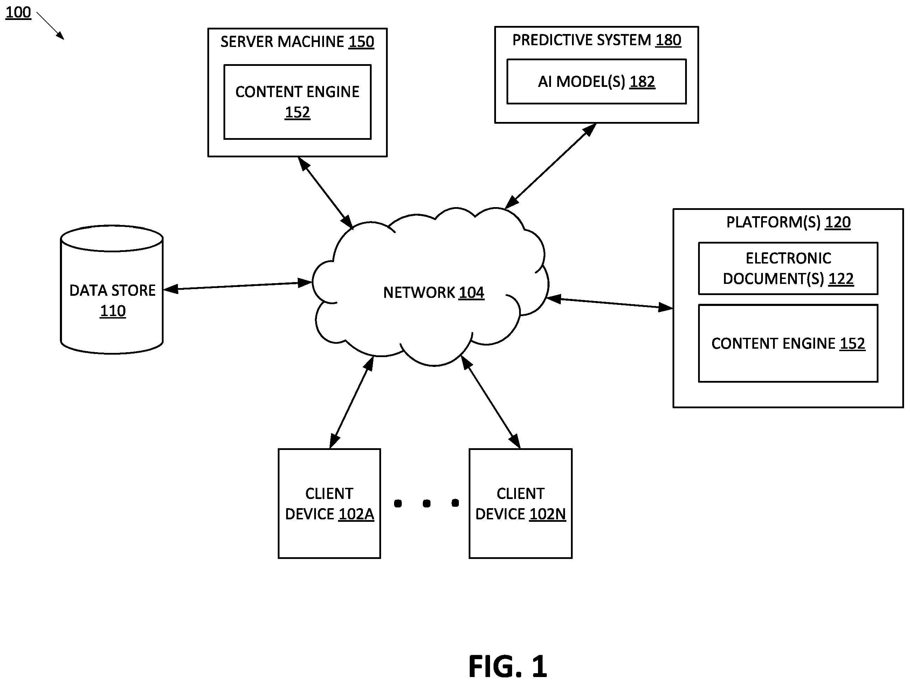

**FIG. 1** illustrates an example system architecture 100, in accordance with implementations of the present disclosure. The system architecture 100 (also referred to as "system" herein) includes one or more client devices 102A-N, a data store 110, a platform 120 (e.g., a collaborative document platform, a productivity platform, etc.), one or more server machines (e.g., server machine 150), and/or a predictive system 180, each connected to a network 104. In implementations, network 104 may include a public network (e.g., the Internet), a private network (e.g., a local area network (LAN) or wide area network (WAN)), a wired network (e.g., Ethernet network), a wireless network (e.g., an 802.11 network or a Wi-Fi network), a cellular network (e.g., a Long Term Evolution (LTE) network), routers, hubs, switches, server computers, and/or a combination thereof.

In some implementations, data store 110 is a persistent storage that is capable of storing data as well as data structures to tag, organize, and index the data. Data can include (or include data of) one or more electronic documents and/or metadata associated with the one or more electronic documents, in accordance with embodiments described herein. Data store 110 can be hosted by one or more storage devices, such as main memory, magnetic or optical storage based disks, tapes or hard drives, NAS, SAN, and so forth. In some implementations, data store 110 can be a network-attached file server, while in other embodiments data store 110 can be some other type of persistent storage such as an object-oriented database, a relational database, and so forth, that may be hosted by platform 120 or one or more different machines (e.g., server machine 150) coupled to the platform 120 via network 104.

Client devices 102A-N (collectively and individually referred to as client device(s) 102 herein). can include one or more computing devices such as personal computers (PCs), laptops, mobile phones, smart phones, tablet computers, netbook computers, network-connected televisions, etc. In some implementations, a client device 102 can also be referred to as a "user device." Client devices 102 can include a content viewer. In some implementations, a content viewer can be an application that provides a user interface (UI) for users to view or upload content, such as images, media items, web pages, documents, etc. For example, the content viewer can be a web browser that can access, retrieve, present, and/or navigate content (e.g., web pages such as Hyper Text Markup Language (HTML) pages, digital media items, etc.) served by a web server. The content viewer can render, display, and/or present the content to a user. The content viewer can also include an embedded media player (e.g., a Flash^{®} player or an HTML5 player) that is embedded in a web page (e.g., a web page that may provide information about a product sold by an online merchant). In another example, the content viewer can be a standalone application (e.g., a mobile application or app) that allows users to view digital media items (e.g., digital media items, digital images, electronic books, etc.). In some implementations, the content viewer can be an electronic document platform application for users to generate, edit, and/or upload content for electronic documents on the platform 120. In other or similar implementations, the content viewer can be an electronic messaging platform application (e.g., an electronic mail (e-mail) application) for users to generate and send messages via platform 120. As such, the content viewers can be provided to the client devices 102A-102N by platform 120.

In some implementations, platform 120 can be one or more computing devices (such as a rackmount server, a router computer, a server computer, a personal computer, a mainframe computer, a laptop computer, a tablet computer, a desktop computer, etc.), data stores (e.g., hard disks, memories, databases), networks, software components, and/or hardware components that may be used to provide a user with access to a file (e.g., an electronic document, an e-mail message, etc.) and/or provide the file to the user. For example, platform 120 can be an electronic document platform, such as a collaborative document platform or a productivity platform. The electronic document platform may allow a user to create, edit (e.g., collaboratively with other users), access or share with other users an electronic document stored at data store 110. In another example, platform 120 can allow a user to create, edit, or access electronic messages (e.g., e-mails) addressed to other users of the electronic messaging platform or users of client devices outside of the electronic messaging platform. Platform 120 can also include a website (e.g., a webpage) or application back-end software that can be used to provide a user with access to files.

As described above, platform 120 can provide users with access to one or more electronic communication services that enable users to correspond with other users of platform 120 and/or non-users of platform 120. An electronic communication service includes any service that enables the transmission of electronic message(s) between client devices 102 of system 100 or of other client devices of another system. In some embodiments, the electronic communication service can include an electronic mail (e-mail) communication service, a chat message communication service, and so forth. It should be noted that although some embodiments herein are described with respect to e-mail communication and chat messaging communication, such embodiments can be applied to any type of communication between users and/or between client devices 102 of users. For example, electronic message(s) can include e-mail messages, chat messages (e.g., instant messages), comment messages associated with an electronic document associated with the platform 120 and/or users of the platform 120, messages transmitted during a virtual meeting hosted by the platform 120, messages and/or information associated with tasks or calendar events associated with users of the platform 120, and so forth.

In some embodiments, the functionalities of platform 120 can be supported by one or more AI models 182 (collectively and individually referred to as AI models 182 or AI model 182 herein) provided by predictive system 180. An AI model 182 can be trained to perform multiple types of tasks pertaining to the functionalities of platform 120 and/or files of platform 120. Such tasks include, but are not limited to, content generation, content summarization, content expansion, data classification, knowledge retrieval, and so forth, as well as performing operations on behalf of a requesting user (e.g., creating a calendar invitation, generating and transmitting an electronic message, etc.). A user of platform 120 can access the AI model(s) 182 of predictive system 180 via one or more tools or resources of platform 120. For example, platform 120 can provide a client device 102 associated with a user with access to a user interface (UI) for an application that enables a user to create and/or edit a collaborative electronic document (e.g., a collaborative word document, a collaborative spreadsheet document, a collaborative slide presentation document, etc.). The UI can include one or more UI elements that enable the user to engage with the AI model(s) 182 of predictive system 180 in accordance with the functionality of the application. For instance, the UI can include a UI element that enables a user to request generated content from the AI model(s) 182. Such a request can include or otherwise correspond to a query for AI model(s) 182. Upon detecting a user engagement with the UI element (e.g., via a UI of the client device 102), the platform can provide the query to predictive system 180. Predictive system 180 can provide a prompt associated with the query as an input to the AI model(s) 182 and can obtain an output of the model(s), which can include generated content, in accordance with the example. A prompt refers to a natural language text that requests the AI model(s) 182 to perform a specific tasks. In some embodiments, a prompt can include the query provided by the user and/or can include additional or alternative information associated with the query provided by the user. Platform 120 can update the UI provided to the client device 102 to include the generated content for presentation to the user. It should be noted that embodiments of the present disclosure are not limited to the tasks or functions explicitly described herein (e.g., content generation, content summarization, etc.) and embodiments can be applied to any type of task or function that could be performed by an AI model.

In some embodiments, AI model 182 can be an AI model that has been trained on a corpus of textual data. In some embodiments, the AI model 182 can be a model that is first pre-trained on a corpus of text to create a foundational model, and afterwards fine-tuned on more data pertaining to a particular set of tasks to create a more task-specific, or targeted, model. The foundational model can first be pre-trained using a corpus of text that can include text context in the public domain, licensed content, and/or proprietary content. Such a pre-training can be used by the model to learn broad language elements including general sentence structure, common phrases, vocabulary, natural language structure, and any other elements commonly associated with natural language in a large corpus of text. In some embodiments, this first, foundational model can be trained using self-supervision, or unsupervised training on such datasets.

In some embodiments, the AI model 182 can then be further trained and/or fine-tuned on organizational data, including proprietary organizational data. The AI model 182 can also be further trained and/or fine-tuned on organizational data associated with a file, including proprietary organizational data associated with a file.

In some embodiments, the second portion of training, including fine-tuning, may be unsupervised, supervised, reinforced, or any other type of training. In some embodiments, this second portion of training may include some elements of supervision, including learning techniques incorporating human or machine-generated feedback, undergoing training according to a set of guidelines, or training on a previously labeled set of data, etc. In a non-limiting example associated with reinforcement learning, the outputs of the AI model 182 while training may be ranked by a user, according to a variety of factors, including accuracy, helpfulness, veracity, acceptability, or any other metric useful in the fine-tuning portion of training. In this manner, the AI model 182 can learn to favor these and any other factors relevant to users within an organization, or associated with a virtual meeting, when generating a response. In such a way, a foundational model can be further trained to perform within a virtual meeting, and provide useful information, as well as help to accomplish useful tasks associated with the virtual meeting.

In some embodiments, the AI model 182 may include one or more pre-trained models, or fine-tuned models. In a non-limiting example, in some embodiments, the goal of the "fine-tuning" may be accomplished with a second, or third, or any number of additional models. For example, the outputs of the pre-trained model may be input into a second AI model that has been trained in a similar manner as the "fine-tuned" portion of training above. In such a way, two more AI models may accomplish work similar to one model that has been pre-trained, and then fine-tuned.

In one embodiment, the AI model 182 may be one or more of decision trees, random forests, support vector machines, or other types of machine learning models. In one embodiment, the AI model 145 may be one or more artificial neural networks (also referred to simply as a neural network). The artificial neural network may be, for example, a convolutional neural network (CNN) or a deep neural network. In one embodiment, processing logic performs supervised machine learning to train the neural network.

Artificial neural networks generally include a feature representation component with a classifier or regression layers that map features to a target output space. A convolutional neural network (CNN), for example, hosts multiple layers of convolutional filters. Pooling is performed, and non-linearities may be addressed, at lower layers, on top of which a multi-layer perceptron is commonly appended, mapping top layer features extracted by the convolutional layers to decisions (e.g., classification outputs). The neural network may be a deep network with multiple hidden layers or a shallow network with zero or a few (e.g., 1-2) hidden layers. Deep learning is a class of machine learning algorithms that use a cascade of multiple layers of nonlinear processing units for feature extraction and transformation. Each successive layer uses the output from the previous layer as input. Neural networks may learn in a supervised (e.g., classification) and/or unsupervised (e.g., pattern analysis) manner. Some neural networks (e.g., such as deep neural networks) include a hierarchy of layers, where the different layers learn different levels of representations that correspond to different levels of abstraction. In deep learning, each level learns to transform its input data into a slightly more abstract and composite representation.

In some embodiments, the AI model 182 may be one or more recurrent neural networks (RNNs). An RNN is a type of neural network that includes a memory to enable the neural network to capture temporal dependencies. An RNN is able to learn input-output mappings that depend on both a current input and past inputs. The RNN will address past and future measurements and make predictions based on this continuous measurement information. One type of RNN that may be used is a long short term memory (LSTM) neural network.

As indicated above, the AI model 182 may be one or more generative AI models, allowing for the generation of new and original content. The generative AI model can use other machine learning models including an encoder-decoder architecture including one or more self-attention mechanisms, and one or more feed-forward mechanisms. In some embodiments, the generative AI model can include an encoder that can encode input textual data into a vector space representation; and a decoder that can reconstruct the data from the vector space, generating outputs with increased novelty and uniqueness. The self-attention mechanism can compute the importance of phrases or words within a text data with respect to all of the text data. A generative AI model can also utilize the previously discussed deep learning techniques, including recurrent neural networks (RNNs), convolutional neural networks (CNNs), or transformer networks.

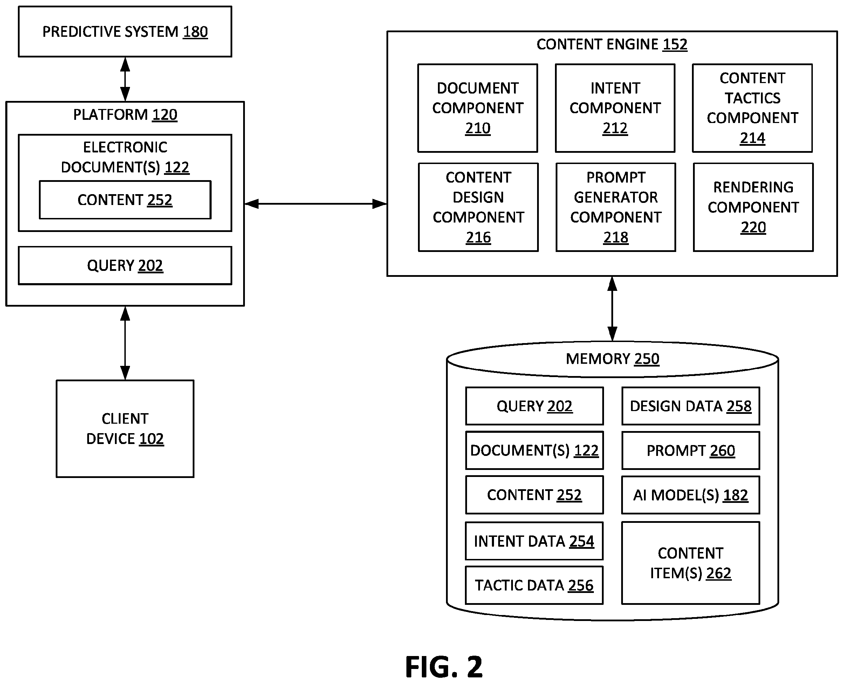

As described above, platform 120 can provide users with access to tools and/or functionalities that enable users to create and/or customize content in accordance with a content concept. A content concept refers to a high-level idea that provides context and direction for one or more content items. In some embodiments, platform 120 can provide a client device 102 with a user interface (UI) that includes one or more UI elements that enable a user to provide a user query including a request for content in accordance with a content concept. As described herein, content engine 152 of platform 120 can generate a prompt for AI model 182 that includes an expanded version of the request to generate content. The expanded version of the request can include or otherwise reflect an intent of the request for content, a tactic or strategy associated with the request for content, design elements of the request for content, and so forth. Content engine 152 can provide the prompt as an input to AI model(s) 182 and obtain one or more outputs, which includes content item(s) generated based on the expanded request for content and existing content of electronic documents associated with the user and/or the content concept. In some embodiments, the electronic documents 122 can be stored at data store 110 and/or can include web documents that are accessible via network 104. Content engine 152 may identify the existing content and provide the existing content (or an indication of the existing content) as an additional input to AI model(s) 182, in some embodiments. In other or similar embodiments, AI model(s) 182 can retrieve the existing content from the electronic documents 122. Content engine 152 can provide the content item(s) of the output(s) of AI model(s) 182 for presentation via the UI of client device 102. In some embodiments, the UI can additionally include one or more UI elements that enable the user to request a modification to the generated content item(s). Further details regarding creation and modification of content item(s) in accordance with a user-provided content concept are provided with respect to **FIGs. 2-6** below.

It should be noted that although some embodiments and examples refer to content while others refer to content items. For purposes of explanation only, content refers to any information, message, or creative material intended for consumption by an audience. A content item refers to a single, discrete unit of content that can be created, viewed, shared, or managed individually. Content may be made up of otherwise composed of one or more content items, in accordance with embodiments of the present disclosure. It should also be noted that although some embodiments and examples refer to content and/or content items being included in electronic documents (e.g., electronic documents 122), such embodiments and examples can be applied to any content, regardless of whether content is included in an electronic document 122. For example, content and/or content items can be associated with a discrete file that is not associated with or does not otherwise correspond to an electronic document 122, such as a word document, a spreadsheet document, etc. Further, although some examples of the present disclosure are described with respect to a social media campaign, content or content items obtained in accordance with techniques described herein can be implemented or otherwise distributed for any purpose.

It should be noted that although **FIG. 1** illustrates content engine 152 as part of platform 120, in additional or alternative embodiments, one or more portions or components of content engine 152 can reside and/or be executed at client device(s) 102. In other or similar embodiments, one or more components of content engine 152 can reside on one or more server machines that are remote from platform 120. In an illustrative example, content engine 152 can reside at server machine 150. It should be noted that in some other implementations, the functions of platform 120, server machine 150, and/or predictive system 180 can be provided by more or a fewer machines. For example, in some implementations, components and/or modules of platform 120, server machine 150, and/or predictive system 180 may be integrated into a single machine, while in other implementations components and/or modules of any of platform 120, server machine 150, and/or predictive system 180 may be integrated into multiple machines. In addition, in some implementations, components and/or modules of server machine 150, server machine 160, and/or predictive system 180 may be integrated into platform 120.

In general, functions described in implementations as being performed platform 120, server machine 150, and/or predictive system 180 can also be performed on the client devices 102A-N in other implementations. In addition, the functionality attributed to a particular component can be performed by different or multiple components operating together. Platform 120 can also be accessed as a service provided to other systems or devices through appropriate application programming interfaces, and thus is not limited to use in websites.

In implementations of the disclosure, a "user" can be represented as a single individual. However, other implementations of the disclosure encompass a "user" being an entity controlled by a set of users and/or an automated source. For example, a set of individual users federated as a community in a social network can be considered a "user." In another example, an automated consumer can be an automated ingestion pipeline of platform 120.

Further to the descriptions above, a user may be provided with controls allowing the user to make an election as to both if and when systems, programs, or features described herein may enable collection of user information (e.g., information about a user's social network, social actions, or activities, profession, a user's preferences, or a user's current location), and if the user is sent content or communications from a server. In addition, certain data can be treated in one or more ways before it is stored or used, so that personally identifiable information is removed. For example, a user's identity can be treated so that no personally identifiable information can be determined for the user, or a user's geographic location can be generalized where location information is obtained (such as to a city, ZIP code, or state level), so that a particular location of a user cannot be determined. Thus, the user can have control over what information is collected about the user, how that information is used, and what information is provided to the user.

**FIG.** 2 is a block diagram of an example platform 120, an example predictive system 180, and an example content engine 152, in accordance with implementations of the present disclosure. As described above, platform 120 can provide users with access to tools or functionalities that enable users to create or modify content (e.g., for inclusion in an electronic document 122) in accordance with a content concept. In some embodiments, a user of client device 102 can access such tools or functionalities to provide a user query 202 specifying a content concept and content engine 152 can obtain content item(s) 262 generated by AI model(s) 182 that reflect the content concept. As illustrated by **FIG. 2****,** content engine 152 can include a document component 210, an intent component 212, a content tactics component 214, a content design component 216, a prompt generator component 218, and/or a rendering component 220. Details regarding the components of content engine 152 are provided herein with respect to **FIGs. 2-6****.** Platform 120, predictive system 180, and/or content engine 152 can be connected to a memory 250 (e.g., via network 104, via a bus, etc.). Memory 250 can include one or more portions of data store 110, in some embodiments. In other or similar embodiments, memory 250 can include or correspond to any memory of any component of system 100 and/or otherwise accessible to a component of system 100.

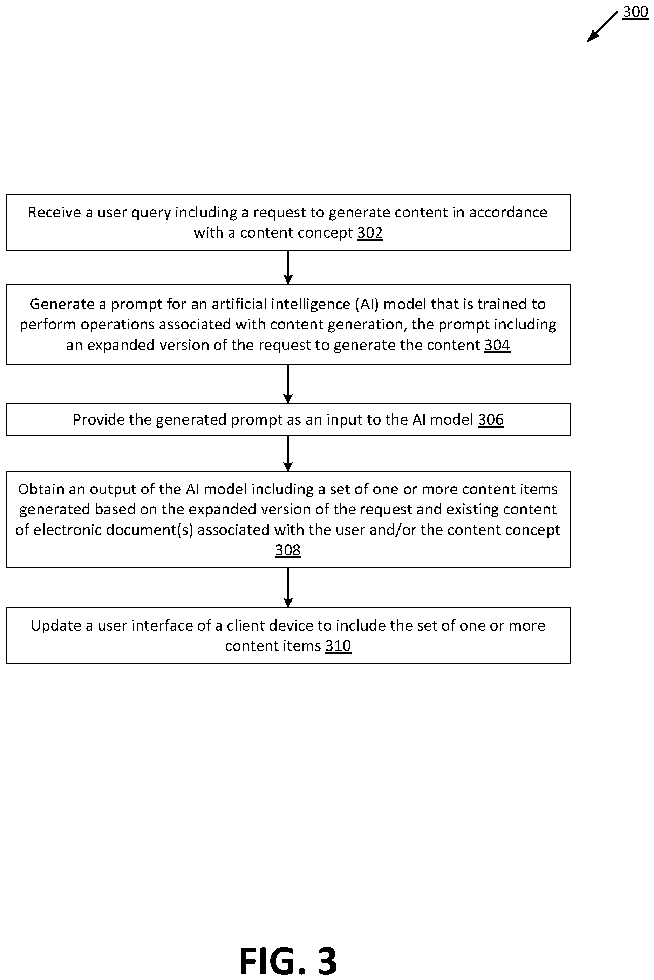

**FIG. 3** depicts a flow diagram of an example method 300 for generation of content using artificial intelligence (AI), in accordance with implementations of the present disclosure. Method 300 can be performed by processing logic that can include hardware (circuitry, dedicated logic, etc.), software (e.g., instructions run on a processing device), or a combination thereof. In one implementation, some or all the operations of method 300 can be performed by one or more components of system 100 of **FIG. 1****.** In some embodiments, some or all of the operations of method 300 can be performed by content engine 152.

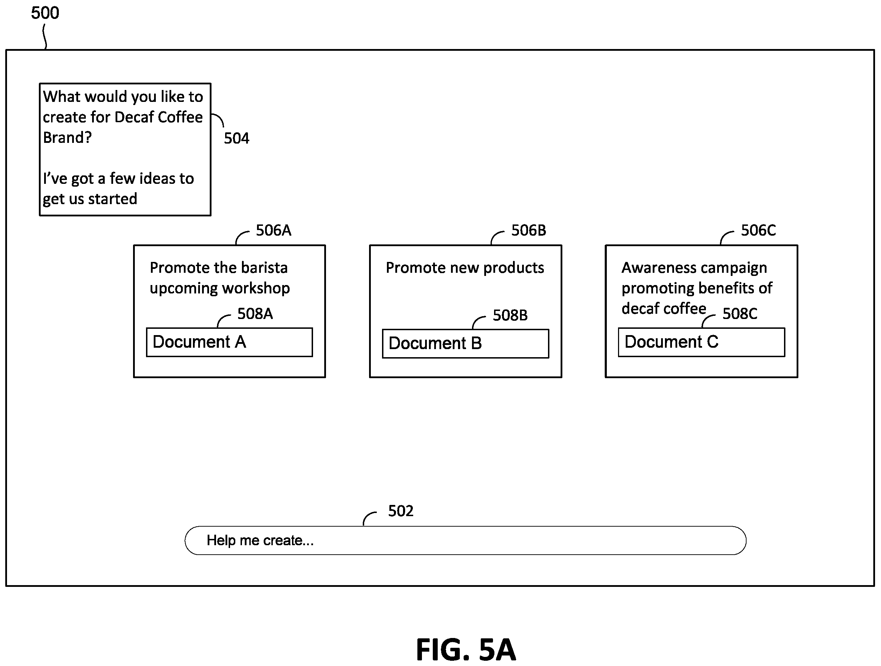

At block 302, processing logic receives a user query including a request to generate content in accordance with a content concept. As described above, platform 120 can provide a client device 102 with a UI including one or more UI elements that enable a user to provide a user query. **FIG. 5A** illustrates an example UI 500, in accordance with implementations of the present disclosure. As illustrated by **FIG. 5A****,** UI 500 can include a first UI element 502 that enables a user to provide the query 202. UI element 502 can include a text box that enables the user to provide a textual version of the user query. In other or similar embodiments, the first UI element 502 can enable the user to provide the query 202 in other formats, such as a verbal format. For example, the first UI element 502 can include a button element that, upon engagement by a user, initiates an audio recording mechanism of client device 102. The user can verbally provide the query 202, which is recorded by the audio recording mechanism. Once the user has finished providing the query 202, client device 102 can transmit the audio recording of the query 202 to platform 120 and/or can convert the audio recording to a text string representing the query 202. Upon obtaining a query 202 via first UI element 502, client device 102 can transmit the query 202 to platform 120 (e.g., via network 104).

In some embodiments, platform 120 and/or content engine 152 can determine one or more candidate content items for generation based on existing content 252 of electronic document(s) 122 associated with a user. The UI can include one or more UI elements associated with such determined candidate content items. In some embodiments, document component 210 of content engine 152 can analyze data or metadata associated with electronic documents 122 associated with a user and identify, based on the analysis, a set of electronic documents 122 including content 252 pertaining to particular content concept. For example, each electronic document 122 may be associated with one or more tags (e.g., mapped to document 122 at data store 110) that indicates a context (e.g., a meaning, a purpose, a relevance, an interpretation, etc.) of content 252 of such document 122. The tag(s) may be generated or otherwise obtained in accordance with a document tagging protocol of platform 120, in some embodiments. Document component 210 can parse the tag(s) associated with each document 122 associated with the user and determine that the set of electronic documents 122 are associated with one or more common or otherwise corresponding tags. Such common or corresponding tags can indicate a content concept that is shared by content 252 of each of the set of electronic documents. In other or similar embodiments, document component 210 can provide content 252 of electronic documents 122 as an input to an AI model 182 that is trained to predict or otherwise determine common content concepts or themes across documents 122. Such AI model is referred to herein as a document relation model. Document component 210 can obtain one or more outputs of the document relation model, which can indicate a common concept or theme across the documents 122 and/or one or more documents 122 that include content 252 pertaining to such concept or theme.

Upon identifying documents 122 including content 252 pertaining to a common concept or theme, document component 210 can determine one or more candidate content items that can be generated in accordance with the concept or theme. In some embodiments, document component 210 can provide the identified documents 122 and/or the relevant content 252 of the documents 122 as an input to an AI model 182 that is trained to predict one or more types of content items that correspond to the concept or theme of the content. Such AI model is referred to herein as a candidate content item model. In some embodiments, the AI model can include AI model 182, which, as described above, can include a general purpose model that is trained using a large corpus of data. In such embodiments, document component 210 can provide the identified documents 122 and/or the relevant content 252 as an input to AI model 182 with a prompt instructing the AI model 182 to identify candidate content items that can be generated in accordance with the concept or theme of the content 252 of electronic documents 122. In other or similar embodiments, the AI model can include a specific purpose AI model that is trained to perform the specific task of predicting or otherwise identifying candidate content items that can be generated in accordance with the concept or theme of the content 252 of electronic documents 122. Such model is referred to herein as a candidate content item model. Document component 210 can obtain one or more outputs of the AI model, which can include an indication of one or more candidate content items. Platform 120 can update UI 500 to include one or more UI elements pertaining to the candidate content items, as illustrated by **FIG. 5A****.**

In an illustrative example, document component 210 can determine that a set of electronic documents 122 associated with the user relate to products and/or workshops offered by a decaf coffee brand, in accordance with embodiments described herein. The UI 500 can include one or more UI elements (e.g., UI element 504, UI elements 506, etc.) associated with the common concept of the product and workshop offered by the decaf coffee brand. For example, UI element 504 can include text of "What would you like to create for Decaf Coffee Brand? I've got a few ideas to get us started." UI element(s) 506 can each correspond to a respective candidate content item determined based on the content 252 of electronic documents 122. For example, UI element 506A can pertain to a candidate content item associated with the concept of "Promot[ing] the barista upcoming workshop." UI element 506A can additionally or alternatively include an indicator 508A (e.g., a link) to an electronic document 122 that includes content 252 pertaining to the candidate content item. UI element 506B can pertain to a candidate content item associated with the concept of "Promot[ing] new products" and/or can include an indicator 608B to an electronic document 122 that includes content 252 pertaining to the candidate content item. UI element 506C can pertain to a candidate content item associated with the concept of an "Awareness campaign promoting benefits of decaf coffee" and/or can include an indicator 508C to an electronic document 122 that includes content 252 pertaining to the candidate content item.

In some embodiments, client device 102 can detect that a user has engaged with one or more of UI elements 506 and, based on the detection, can transmit a signal to platform 120 indicating the candidate content item selected by the user, where the signal corresponds to a query 202 for generation of such candidate content item. For example, upon detecting that the user has engaged with UI element 506B, client device 102 can provide a signal to platform 120 corresponding to a query 202 for generation of one or more content items associated with promoting new products. In some embodiments, upon detecting a user interaction with any of UI elements 508, client device 102 may update UI 500 to provide content 252 of the corresponding electronic document 122 for presentation and/or may open a new window what includes the content 252 of the corresponding electronic document 122 (e.g., for simultaneous access to the content 252 with UI 500 by the user).

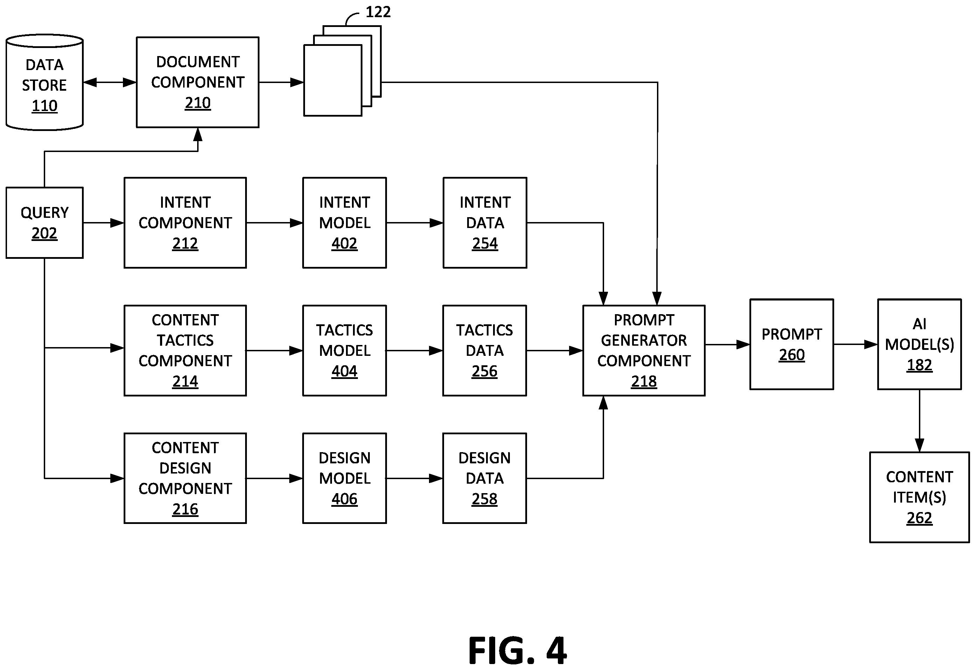

Referring back to **FIG. 3****,** at block 304, processing logic generates a prompt for an AI model that is trained to perform operations associated with content generation. The prompt includes an expanded version of the request to generate the content. In some embodiments, one or more components (e.g., intent component 212, content tactics component 214, content design component 216, etc.) can determine or otherwise determine data for inclusion in the prompt and provide such data to prompt generator component 218, which generates the prompt for AI model 182. For example, intent component 212 can generate or otherwise obtain intent data 254 that indicates an intent associated with the request of query 202, content tactics component 214 can generate or otherwise obtain tactic data 256 that indicates a tactic or strategy associated with the request of query 202, and content design component 216 can generate or otherwise obtain design data 258 that indicates one or more design elements associated with the content item. Further details regarding generating the prompt are provided with respect to **FIG. 4****.**

As illustrated by **FIG. 4****,** query 202 can be provided to document component 210, intent component 212, content tactics component 214, and/or content design component 216. In some embodiments, document component 210 can identify one or more electronic documents 122 including content 252 pertaining to the content concept of the query 202. For example, as described above, a user may provide query 202 including the content concept via UI element 502 of UI 500. Document component 210 may identify electronic documents 122 (e.g., of data store 110) that include content 252 pertaining to the content concept, in accordance with embodiments described herein. For example, document component 210 may parse data store 110 to identify electronic documents 122 associated with tags that match or otherwise correspond to the content concept, in some embodiments. In other or similar embodiments, document component 210 may provide an indication of the content concept as an input to an AI model (e.g., AI model 182, document relation model) and obtain one or more outputs of the AI model, which indicate electronic documents 122 (e.g., at data store 110) that include content 252 corresponding to the content concept. As illustrated by **FIG. 4****,** document component 210 may provide the identified electronic documents 122 to prompt generator component 218. As also described above, the user may provide query 202 may engage with a UI element 506 of UI 500. Document component 210 may provide electronic documents 122 associated with query 202 corresponding to the engaged UI element 506 (e.g., as identified in accordance with embodiments described above) to prompt generator component 218.

Intent component 212 can determine a user intent of query 202. An intent of a query 202 refers to a goal or purpose that the user wishes to accomplish from their input. In some embodiments, intent component 212 can determine the user intent based on one or more outputs of an intent model 402 that is trained to predict an intent associated with a user query 202. In some embodiments, intent model 402 can include a logic regression model, a support vector machine (SVM) model, a Naive Bayes model, a long short-term memory (LSTM) model, a gated recurrent unit (GRU) model, a transformer-based model, and so forth. Intent component 212 can provide query 202 and/or information associated with query 202 as an input to intent model 402 and can obtain one or more outputs of intent model 402. The information associated with query 202 can include, but is not limited to, information obtained from a user account associated with the user, content (e.g., content 252) extracted from electronic documents 122, information or data regarding an application accessed by the user when the request was received, and so forth. The one or more outputs can indicate a predicted intent associated with the user query 202. Intent component 212 can store the predicted intent at memory 250 as intent data 254. In some embodiments, intent component 212 can provide intent data 254 to prompt generator component 218 for use in generating prompt 260, as described below.

In some embodiments, intent component 212 can perform one or more preprocessing operations to query 202 prior to providing query 202 as an input to intent model 402. For example, intent component 212 can perform one or more operations to generate or otherwise obtain tokens or embeddings representing the semantic meaning of words or phrases of the query 202. Intent component 212 may perform one or more additional operations to determine a context and/or a semantic pattern of the words or phrases based on the obtained tokens or embeddings. Intent component 212 may provide the tokens or embeddings and/or the determined context and/or semantic pattern as an input to intent model 402. In other or similar embodiments, intent model 402 may generate or obtain the tokens or embeddings and/or determine the context and/or semantic pattern of the query 202.

Content tactics component 214 can determine a tactic or strategy associated with content items 262 to be generated by AI model 182. A tactic or strategy associated with a content item 262 refers to an approach used to achieve a specific goal or outcome associated with the content item 262. Specifically, a strategy refers to an overall plan or guiding principle behind a content item 262, which aligns with broader objectives, while a tactic refers to a technique or actionable operations used within the content item 262 to carry out the strategy. In accordance with prior illustrative examples, query 202 may request or otherwise correspond to content items 262 for inclusion in one or more social media posts of a social media campaign for a decaf coffee brand. The strategy associated with such content items 262 can include brand awareness, lead generation, community engagement, product promotion, etc., and the tactic associated with such strategy can include using "urgency phrases" (e.g., "limited time only") or trending hashtags in the content items 262.

In some embodiments, content tactics component 214 can determine a tactic or strategy associated with content item(s) 262 based on one or more outputs of a tactics model 404. Tactics model 404 can be trained to predict a tactic or strategy for content item 262 that is to be generated in accordance with a content concept. In some embodiments, tactics model 404 may include a model that employs natural language processing (NLP) techniques and/or multi-label classification techniques to predict a strategy or tactic that is relevant to the content concept. Content tactics component 214 can obtain one or more outputs of tactics model 404, which can include a predicted strategy or tactic for the content item 262 to be generated in accordance with the content concept associated with query 202. Content tactics component 214 can store the predicted strategy or tactic at memory 250 as tactics data 256 and/or can provide tactics data 256 to prompt generator component 218 for use in generating prompt 260, as described below.

Content design component 216 can determine one or more design elements associated with content item 2262 to be generated by AI model 182. A design element refers to a visual or structural component that contributes to the appearance, layout, or aesthetic style of the content item. Design elements for a textual content item can include, but are not limited to, a typography of the content item, a hierarchy of the content item (e.g., relative to other content items), a color of the content item, a spacing associated with the content item, and so forth. Design elements for an image or video content item can include, but are not limited to, a color of the content item, characteristics of imagery (e.g., photos, illustrations, icons, graphics, etc.) of the content item, a shape or texture of the content item, and so forth. Design elements for an audio content item can include, but are not limited to, a tone, pitch, pace, energy, etc. of a voice of the audio content, background sounds of the audio content, sound effects of the audio content, a narrative structure of the audio content, and so forth.

In some embodiments, content design component 214 can determine one or more design elements associated with content item(s) 262 based on one or more outputs of a design model 406. Design model 406 can be trained to predict design elements for a content item 262 that is to be generated in accordance with a content concept. In some embodiments, design model 406 may include a model that employs natural language processing (NLP) techniques and/or multi-label classification techniques to predict design elements that are relevant to the content concept and/or consistent with design elements included in electronic documents 122 associated with the user. Content design component 214 can provide query 202 as an input to design model 406 and can obtain one or more outputs of design model 406, which can include an indication of one or more predicted design elements to be applied or otherwise included in content item(s) 262 generated by AI model 182. Content design component 214 can store the indication of the predicted design elements at memory 250 as design data 258 and/or can provide design data 258 to prompt generator component 218 for use in generating prompt 260, as described below.

As described below, design model 406 may be trained using a training data set that includes a historical query and/or a historical content concept associated with a historical content item and mapped to one or more labels reflecting design elements of the historical content item. Accordingly, design model 406 may be trained to predict a design element for content item 262 based on the content concept of user query 262. In additional or alternative embodiments, content design component 214 can provide existing content 252 of electronic documents 122 as an additional input to design model 406. Content design component 214 can additionally or alternatively provide intent data 254 and/or tactics data 256 as an input to design model 406. In such embodiments, content design component 214 may also provide an instruction to design model 406 to predict the design element based on design elements of the existing content 252 and/or in light of intent data 254 and/or tactics data 256.

Prompt generator component 218 can generate a prompt 260 for AI model 182, which includes an expanded version of the request of query 202. In some embodiments, prompt generator component 218 can generate the prompt 260 for AI model 182 based on existing content 252 of electronic document(s) 122, intent data 254, tactics data 256, and/or design data 258. In some embodiments, prompt generator component 218 can generate prompt 260 based on a pre-defined prompt template that corresponds to a type of content items 262 that can be generated by AI model 182 and/or a particular intent associated with a query 202, and/or a particular strategy or tactic for a content item 262. For example, an operator or developer can provide a set of pre-defined prompt templates, which each correspond to a respective type of content item 262 (e.g., an image content item, a text content item, etc.), an intent associated with a query 202, and/or a strategy or tactic for the content item 262 (e.g., a social media campaign to promote a new product or event, a social media campaign to raise awareness of an issue or cause, etc.). Prompt generator component 218 can identify a pre-defined prompt template that corresponds to the type of the content item 262, the intent indicated by intent data 254, and/or the tactics indicated by tactics data 256. The identified prompt template may include one or more fields each associated with data or information pertaining to query 202. For example, one or more first fields can correspond to intent data 254, one or more second fields can correspond to tactics data 256, one or more third fields can correspond to design data 258, and so forth. Prompt generator component 218 can update the pre-defined prompt to include intent data 254, tactics data 256, and/or design data 258 to generate prompt 260.

In other or similar embodiments, prompt generator component 218 can generate prompt 260 by providing existing content 252 of electronic document(s) 122, intent data 254, tactics data 256, and/or design data 258 as an input to a prompt generator model (not shown) that is trained to generate a prompt 260 based on given input data. In some embodiments, the prompt generator model can include a LLM or an encoder-decoder model that is trained to generate an optimized prompt that reflects an expanded version of the request of query 202. When such prompt 260 is provided as input to AI model 182, the AI model 182 generates or modifies content item(s) 262 in accordance with the content concept reflected by the expanded version of the request of query 202. Prompt generator component 218 can provide the existing content 252, intent data 254, tactics data 256, and/or design data 258 as an input to the prompt generator model and can obtain one or more outputs, which can include prompt 260 for AI model 182.

As described above, the prompt 260 obtained by prompt generator component 218 can reflect an expanded version of the request of query 202 for content in accordance with the content concept. In accordance with previous illustrative examples, the query 202 can include a request for content corresponding to a new product launch of a decaf coffee brand. Based on content 252, intent data 254, tactics data 256, and/or design data 258 obtained for such query 202, the generated prompt 260 by prompt generator component 218 can specify one or more types of content items (e.g., image content items, text content items, audio content items, video content items, etc.) that are to be generated in accordance with the content concept, a tactic associated with each content item (e.g., to inform the audience about the benefits of decaf coffee and/or to persuade the audience to purchase the decaf coffee), and/or design elements associated with each content item, which correspond to design elements associated with existing content 252 of electronic document(s) 122 and/or other content (e.g., of other brands) that sell coffee or decaf coffee.

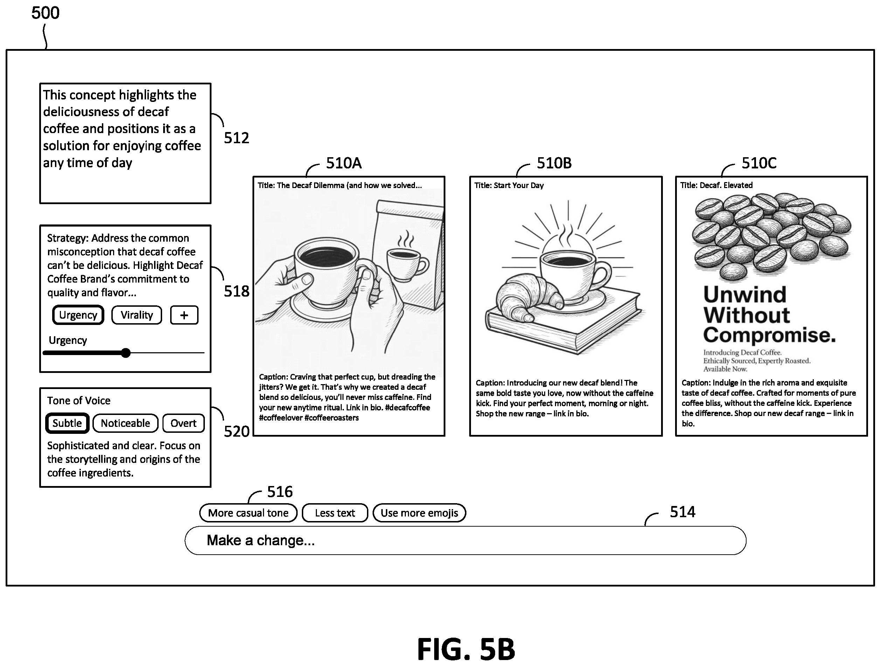

Referring back to **FIG. 3****,** at block 306, processing logic provides the generate prompt as an input to the AI model (e.g., AI model 182). At block 308, processing logic obtains an output of the AI model 182 including a set of one or more content items generated based on the expanded version of the request and existing content of electronic documents associated with the user and/or the content concept. As described above, the output(s) of AI model 182 can include the set of content items 262 that reflect the content concept of the user query 202 and/or the design elements of the existing content 252 of electronic document(s) 122. Example content items 262 generated by AI model 260 are illustrated by FIG. 5B, described below.

At block 310, processing logic updates a user interface of a client device to include the set of one or more content items. Rendering component 220 can update UI 500 to include a rendering of the one or more content items 262 generated by AI model 182, in some embodiments. As illustrated by FIG. 5B, rendering component 220 can update UI 500 to include one or more UI elements 510 that depict the content item(s) 262 generated by AI model 182. For example, UI element 510A includes or otherwise depicts content items 262 generated for a social media post in accordance with the content concept of query 202, the content items 262 including a title content item (e.g., "The Decaf Dilemma (and how we solved..."), an image content item (e.g., an image or drawing illustrating a new decaf coffee product offered by the decaf coffee brand), and/or a text content item (e.g., a caption including "Craving that perfect cup, but dreading the jitters? We get it..."). UI elements 510B and 510C illustrate example alternative social media posts for consideration by the user, which include alternative content items 262 that share the same or similar tactic as the content items 262 of UI element 510A. Content items 262 of UI elements 510B and 510C can be generated in accordance with embodiments described herein and may be generated with content items 262 of UI element 510A and/or separately from content items 262 of UI element 510A. In some embodiments, content engine 152 can update UI 500 to include additional UI elements, such as UI element 512, which indicates the tactic or strategy associated with the content concept (e.g., "This concept highlights the deliciousness of decaf coffee and positions it as a solution for enjoying coffee any time of day").

In some embodiments, content engine 152 can provide users with access to tools or functionalities that enable users to modify content items 262 generated by AI model 182. Content engine 152 can update UI 500 to include UI elements (e.g., UI elements 514-520) corresponding to such tools or functionalities, as illustrated by **FIG. 5B****.** As illustrated by **FIG. 5B****,** UI 500 can include a UI element 514 that enables a user to provide another query 202 indicating one or more modifications to content items 262 of UI element(s) 510. For example, UI element 514 can include a text box that enables the user to provide a text-based query 202 indicating the modifications to content items 262. Content engine 152 may generate an updated prompt 260 based on the query 202 provided via UI element 514 (e.g., in accordance with embodiments described herein) and can provide the updated prompt 260 as an input to AI model 182. Content engine 152 may obtain one or more outputs of AI model 182, which can include updated content items 262 that reflect the modification of the query 202, in some embodiments.

In other or similar embodiments, UI 500 can include one or more additional UI elements 516 that include pre-determined or pre-defined modifications that can be made to content items 262. For example, UI element(s) 516 can include button elements that enable the user to request a pre-defined modification, such as a "more casual tone," "less text," "more emojis," and so forth. The modifications indicated by UI element(s) 516 can be provided or otherwise defined by a developer or operator of platform 120, in some embodiments. In other or similar embodiments, the modifications indicated by UI element(s) 516 can be determined based on characteristics of content items 262. For example, rendering component 220 can determine that one or more content items 262 include text content having a formal tone (e.g., based on one or more content rules associated with platform 120, based on one or more outputs of AI model 182, etc.). Accordingly, rendering component 220 can determine that potential modifications to be made to the content items 262 can include modifying the text content to have a more casual tone, more or less text, etc. Rendering component 220 can update UI 500 to include such UI elements 516 and, upon detecting that a user has engaged with UI element(s) 516, client device 102 can transmit a query 202 corresponding to the modification of the engaged element 516 to platform 120. Platform 120 can generate a prompt 260 reflecting the requested modification and provide the generated prompt as an input to AI model 182 to obtain the modified content item 262 in accordance with the query 202.

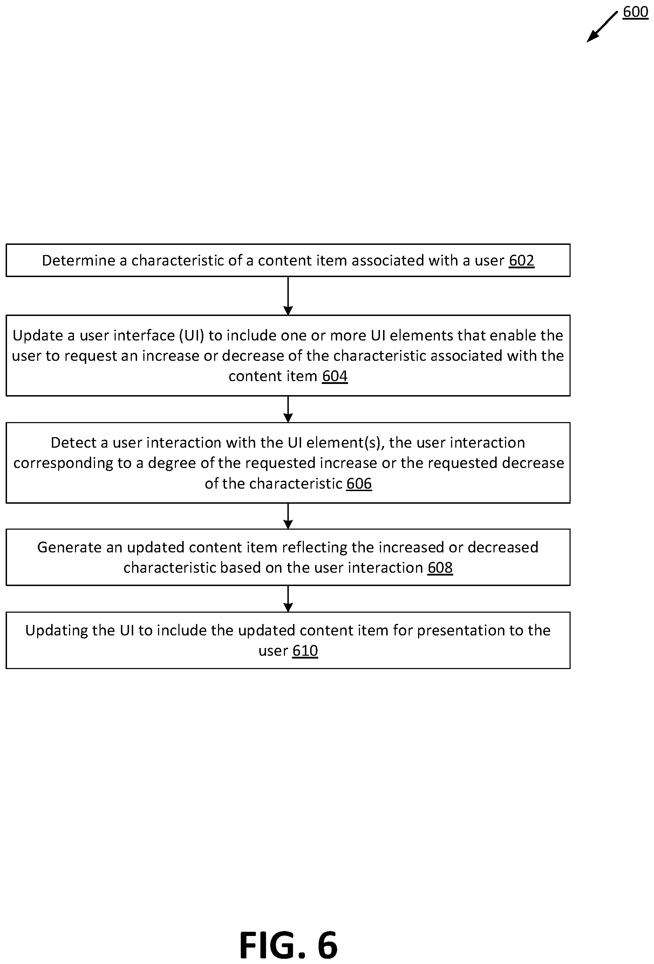

In some embodiments, UI 500 can include UI elements (e.g., UI element 518 and/or 520) that enables a user to modify characteristics or parameters associated with content items 262. For example, as illustrated by FIG. 5B, UI element 518 can enable a user to modify characteristics of content items 262 in accordance with a strategy (e.g., to "[a]ddress the common misconception that decaf coffee can't be delicious" and "[h]ighlight decaf coffee brand's commitment to quality and flavor." In another example, UI element 520 can enable a user to modify a tone of voice associated with content items 262 (e.g., to have a "subtle," "noticeable," or "overt" tone of voice). Details regarding determining the characteristics or parameters of content items 262 that are modifiable and enabling a user to request to modify content items 262 based on such characteristics are described with respect to **FIG. 6** below.

**FIG. 6** depicts a flow diagram of an example method 600 for modification of content using artificial intelligence (AI), in accordance with implementations of the present disclosure. Method 600 can be performed by processing logic that can include hardware (circuitry, dedicated logic, etc.), software (e.g., instructions run on a processing device), or a combination thereof. In one implementation, some or all the operations of method 600 can be performed by one or more components of system 100 of **FIG. 1****.** In some embodiments, some or all of the operations of method 600 can be performed by content engine 152.

At block 602, processing logic determines a characteristic of a content item associated with a user. As described herein, AI model 182 can generate content items 262 based on a content concept of query 202. In some embodiments, the output(s) of AI model 182 can include functional code that, when executed by content engine 152 and/or a component of content engine 152 (e.g., rendering component 220) generates a rendering of the content item 262. The functional code can include or otherwise indicate characteristics of a content item 262 that are displayed via UI 500 when rendered. In some embodiments, processing logic (e.g., rendering component 220) can determine one or more characteristics of a content item 262 based on the functional code generated for such content item 262 by AI model 182. For example, rendering component 220 extract characteristics from the functional code for a content item 262, in some embodiments. In other or similar embodiments, rendering component 220 can determine the characteristics of a content item 262 based on intent data 254, tactics data 256, and/or design data 258, as described herein. In accordance with the illustrative example of **FIG. 5B****,** a characteristic associated with a strategy of content item(s) 262 can include an urgency (e.g., how immediately the audience feels compelled to take action) or virality (e.g., how likely the content item(s) 262, when shared via a social media channel, will distributed to multiple users of the channel) of the content item(s) 262. In another example, a characteristic associated with a strategy of content item(s) 262 can include a degree of persuasive intensity or style (e.g., whether the content item(s) 262 constitute a "hard sell" or a "soft sell").

In some embodiments, rendering component 220 can determine one or more parameter values associated with each characteristic of content item(s) 262. In some embodiments, rendering component 220 can determine a range of parameter values for a respective characteristic that represent a degree of presence of the characteristic. For example, for a characteristic of urgency, rendering component 220 can determine a range of parameter values including an initial parameter value representing a complete lack of urgency (e.g., a value of "0") and a final parameter value representing complete urgency (e.g., a value of "1" or "100"). Rendering component 220 can further determine a parameter value representing the characteristic of the content item 262, within the range of parameter values. In an illustrative example, a content item 262 including text or images that prompt an audience member to purchase a product may be associated with a parameter value of approximately "0.5," while a content item 262 including text or images that prompt the audience member to purchase the product immediately and/or that limited supply of the product remains may be associated with a parameter value of approximately "1." Rendering component 220 can determine the parameter value representing the characteristic of the content item 262 based on one or more outputs of a LLM or in accordance with rules provided by a developer or operator of system 100, in some embodiments.

At block 604, processing logic updates a UI to include one or more UI elements that enable the user to request an increase or decrease of the characteristic associated with the content item. As illustrated by **FIG. 5B****,** rendering component can update UI 500 to include UI element 518, which includes components that illustrate the characteristics determined for content item(s) 262 (e.g., "urgency," "virality," etc.). In some embodiments, UI element 518 can further include a component that enables the user to request to increase or decrease the presence of a characteristic of content item(s) 262. For example, upon detecting that a user has engaged with a button of UI 518 corresponding to the "urgency" characteristic, rendering component 220 may update UI element 518 to include a slider bar component including a slider bar line and a slider bar indicator. A first end of the slider bar line (e.g., the left end) can correspond to the initial parameter value of the determined range of parameter values and a second end of the slider bar line (e.g., the right end) can correspond to the final parameter value of the determined parameter value range. The slider bar indicator can be located at a region of the slider bar line corresponding to the parameter value for the characteristic of the content item(s) 262 (e.g., as generated by AI model 182). For example, as illustrated by **FIG. 5B****,** the slider bar indicator can be located at a mid-point of the slider bar line, corresponding to the parameter value of "0.5" for the urgency characteristic of the content item(s) 262 generated by AI model 182.

At block 606, processing logic detects a user interaction with the UI element(s), the user interaction corresponding to a degree of the requested increase or decrease of the characteristic associated with the content item. In some embodiments, client device 102 can detect a user interaction with the slider bar indicator of the slider bar component. For example, client device 102 can detect that the user has moved the slider bar indicator towards or away from ether end of the slider bar line (e.g., corresponding to an increased or decreased parameter value of the urgency characteristic). Client device 102 can transmit a notification of the modified location of the slider bar component to platform 120. Rendering component 220 can determine a parameter value within the range of parameter values for the characteristic that corresponds to the modified location of the slider bar indicator. For example, upon determining that the user has move the slider bar indicator between the mid-point of the slider bar line and the right end of the slider bar line, rendering component 220 can determine a parameter value of "0.75" corresponding to the modified location of the slider bar indicator.

At block 608, processing logic generates an updated content item reflecting the increased or decreased characteristic based on the user interaction. In some embodiments, content engine 152 can generate an updated prompt 260 corresponding to the requested increase or decreased characteristic and provide the updated prompt 260 as an input to AI model 182. The updated prompt 260 may include data or information associated with the prompt 260 that caused AI model 182 to generate content item(s) 262 and may include an indication of the requested increase or decrease of the characteristic. For example, content engine 152 can generate an updated prompt 260 reflecting the increase of the parameter value for the urgency characteristic from a value of "0.5" to a value of "0.75" (e.g., which indicates the user is requesting a new content item with slightly more urgency). Content engine 152 can obtain one or more outputs of the AI model 182, which can include a content item 262 generated in accordance with the requested increase or decrease of the characteristic. For example, the content item 262 can have a slightly more urgent tone, as requested by the user.

At block 610, processing logic updates the UI to include the updated content item for presentation to the user. In some embodiments, rendering component 220 can update UI 500 to include the content item 262 generated based on the updated prompt 262.

It should be noted that UI 500 can include other types of UI elements that correspond to other types of characteristics of content item(s) 262. For example, as illustrated by **FIG. 5B****,** UI 500 can include a UI element 520 that indicates one or more tone of voice characteristics, as determined in accordance with embodiments described herein. A user can engage with one or more components or portions of UI element 520 to initiate a request to modify a characteristic of content item(s) 262, as described herein.

It should be noted that although embodiments and examples described above refer to modifying content item(s) 262 generated by AI model 182, such embodiments and examples can further be applied to manually created content items 262 (e.g., by a user of platform 120). For example, the user can provide a manually created content item 262 to platform 120 via a UI (e.g., UI 500 or another UI) and can provide a request for modification of the content item 262. The request can include a modification to one or more features or characteristics of the content item 262 and/or a request to convert or transform the content item 262 from one format to another format. For example, the request can include a modification to convert a text content item and/or an image content item to an audio content item (e.g., including an audio signal of a voice describing the text content item and/or the image content item). Content engine 152 can generate the modified content item in accordance with embodiments of the present disclosure. In additional or alternative embodiments, a user can provide a request via the UI to generate a content item based on existing content 252 of electronic document(s) 122 (e.g., in accordance with a content concept). Content engine 152 can generate such content item(s) 262, in accordance with embodiments and examples described herein. In another example, the request can include a modification to convert a text content item and/or an image content item to a video content item (e.g., including a set of video frames depicting content corresponding to the text content item and/or the image content item and/or an audio signal corresponding to the text content item and/or the image content item).

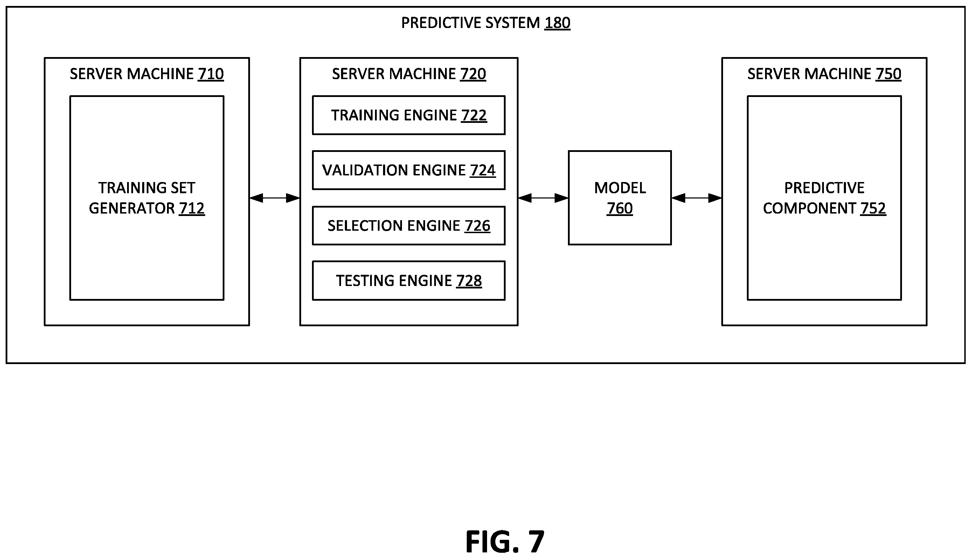

**FIG. 7** illustrates an example predictive system, in accordance with implementations of the present disclosure. As illustrated in **FIG. 7****,** predictive system 180 can include a training set generator 712 (e.g., residing at server machine 710), a training engine 712, a validation engine 724, a selection 726, and/or a testing engine 728 (e.g., each residing at server machine 720), and/or a predictive component 752 (e.g., residing at server machine 750). Training set generator 712 may be capable of generating training data (e.g., a set of training inputs and a set of target outputs) to train one or more AI model 760 (e.g., AI model 182, intent model 402, tactics model 404, design model 406, etc.).

In some embodiments, one or more of AI model(s) 760 (e.g., AI model 182) can include a general purpose model that is trained to perform a wide variety of tasks. In such embodiments, training set generator 712 can generate a training data set for training AI model 182 based on a corpus of textual data, audio data, video data, and so forth. The corpus can include a wide array of information gathered from numerous sources, including publicly available web pages (e.g., blogs, forums, news sites, academic papers, online encyclopedias, etc.), books and literature, social media, research papers, public datasets, and so forth. Training set generator 712 can extract features from data of the corpus and can transform the extracted features into a format that the AI model 182 can interpret. In some embodiments, training set generator 712 can perform one or more tokenization operations (e.g., to break down the textual data, audio data, video data, etc. into smaller units called tokens), one or more normalization operations (e.g., to convert the tokens into a common format and/or a format that can be handled by the AI model 182), one or more noise removal operations (e.g., to remove or filter out unwanted data or metadata), and/or one or more data formatting operations (e.g., to structure the tokens uniformly and indicate contextual windows between tokens indicating dependencies between tokens). In some embodiments, training set generator 712 can obtain annotation data for the tokens obtained based on the data of the corpus. Annotation data can include an indication of a classification associated with the token. In some embodiments, the annotation data can be provided by human annotators or according to other annotation techniques. Training set generator 712 can update the training data set to include the extracted features, the generated tokens, and/or the annotation data. As described below, training engine 722 can use the training data to perform the wide range of tasks.

In other or similar embodiments, one or more AI model(s) 760 can include specific purpose models that are trained to perform specific tasks or operations, in accordance with embodiments described herein. For example, the document relation model (not illustrated) described with respect to **FIGs. 3** and **5A** can be trained to predict or otherwise determine common content concepts or themes across documents 122 and/or documents 122 that include content corresponding to such concepts or themes. In some embodiments, the document relation model can be trained according to supervised learning techniques and/or unsupervised learning techniques. In some embodiments, training set generator 712 can generate a training data set for training the document relation model by identifying a set of historical documents (e.g., of platform 120 or of another platform or system) and generating or otherwise obtaining tokens and/or embeddings for each historical document. The tokens and/or embeddings can represent content units (e.g., paragraphs, sentences, words, etc.) and/or contextual metadata associated with the content units (e.g., titles, document structure, labeled roles, content timestamps, etc.). In some embodiments, training set generator 712 can generate the tokens and/or embeddings based on bidirectional encoder representations from transformers (BERT), robustly optimized BERT training approach (RoBERTa), or sentence BERT (SBERT) based techniques. The training data can determine a degree of similarity between two or more content units (e.g., based on ground truth data provided by a developer or operator) and generate a mapping between tokens and/or embeddings for such content units indicating the determined degree of similarity. The generated mapping can be included in the training data set for training the document relation model, in some embodiments.

In another example, the candidate content model described with respect to **FIGs. 3** and **5A** can be trained to predict or otherwise identify candidate content items that can be generated in accordance with the concept or theme of the content of electronic documents 122. In some embodiments, training set generator 712 can generate a training data set for training the candidate content model by identifying one or more content concepts or themes (e.g., of historical electronic documents 122 of platform 120 or another platform or system) and obtaining an indication of one or more candidate content items corresponding to the concepts or themes (e.g., based on ground truth data provided by a developer or operator). Training set generator 712 can generate a mapping between the content concepts or themes and the indicated candidate content items and update the training data set to include such mapping, in some embodiments.

In yet another example, intent model 402 described with respect to **FIG. 4** can be trained to predict or otherwise determine an intent of a user query 202, as described herein. In some embodiments, intent model 402 can be trained according to supervised learning techniques based on a training data set that trains intent model 402 into one of several predefined intent classes. In some embodiments, the predefined intent classes can correspond to operations that can be performed by AI model 182. For example, the predefined intent classes can correspond to request or instructions to generate or modify content items pertaining to a particular content concept and/or having particular content characteristics. In some embodiments, the predefined intent classes can be provided by a developer or operator of system 100. In other or similar embodiments, the predefined intent classes can be determined based on historical data associated with system 100. Training set generator 712 can obtain historical user queries provided by users of platform 120 and can determine whether each respective historical user query corresponds to a predefined intent class (e.g., as provided by the developer or operator of system 100). In some embodiments, a historical user query can include or otherwise correspond to a request (e.g., a verbal request, a textual request) provided by a prior user of platform 120. In other or similar embodiments, the historical user query can be provided by users of other applications of platform 120 and/or other platforms 120 or systems 100. Training set generator 712 can generate training data for training intent model 402 by generating a mapping between a historical user query, an indication of whether the historical user query corresponds to a predefined intent class and, if so, the corresponding predefined intent class. It should be noted that although embodiments of the present disclosure refer to intent associated with generating and/or modifying content items, the historical user query identified for generating the training data for training intent model 402 can be associated with or otherwise pertain to other types of tasks associated with platform 120, system 100, and/or other systems.

In yet other or similar embodiments, tactics model 404 described with respect to **FIG. 4** can be trained to predict or otherwise determine a tactic or strategy for a content item 262 that is to be generated in accordance with a content concept of a query 202. In some embodiments, tactics model 404 can be trained according to supervised learning techniques based on a training data set that maps a historical user query or a historical content concept and a tactic or strategy associated with content items pertaining to the historical user query or the historical content concept. For example, training set generator 712 can identify a historical content item (e.g., generated by AI model 182 or created or otherwise provided by users or developers of platform 120). Training set generator 712 can determine a historical content concept associated with the historical content item and/or a historical user query corresponding to the historical content concept. In some embodiments, training set generator 712 can determine the historical content concept based on ground truth data provided by a user and/or a developer or engineer of platform 120. In other or similar embodiments, training set generator 712 can determine the historical content concept by providing the historical content item as an input to another AI model (LLM) and obtaining one or more outputs, which reflect a predicted content concept for the historical content item. Training set generator 712 can additionally or alternatively determine a strategy or tactic associated with the historical content item (e.g., based on provided ground truth data, based on one or more outputs of the LLM, etc.) and can generate labels reflecting the determined strategy or tactic. Training set generator 712 can generate a mapping between the obtained historical content concept and/or the historical user query and the generated labels reflecting the determined strategy or tactic, and can update a training data set to include the generated mapping.

In yet another example, design model 406 described with respect to **FIG.** 4 can be trained to predict or otherwise determine one or more design elements for a content item 262 that is to be generated in accordance with a content concept of a query 202. In some embodiments, design model 406 can be trained according to supervised learning techniques based on a training data set that maps a historical user query or a historical content concept and a design element associated with content items pertaining to the historical user query or the historical content concept. In some embodiments, training set generator 712 can determine the historical content concept and/or the historical user query based on ground truth data and/or output(s) of a LLM, as described above. Training set generator 712 can additionally or alternatively determine a design element associated with the historical content item (e.g., based on ground truth data, based on one or more outputs of the LLM) and can generate labels reflecting the determined design element. Training set generator 712 can generate a mapping between the obtained historical content concept and/or the historical user query and the generated labels reflecting the determined design element, and can update a training data set to include the generated mapping.

In yet another example, the prompt generator model (not illustrated) described with respect to **FIG.** 4 can be a specific purpose model that is trained to predict an optimized prompt based on given information. In some embodiments, the prompt generator model can be trained according to LLM techniques. For example, training set generator 712 can generate a training data set for the prompt generator model that includes target prompts written by humans or by LLMs. In some embodiments, the training data set can additionally or alternatively include few-shot examples and/or model output scores associated with the target prompts.

Training engine 722 can train an AI model 760 using the training data from training set generator 712, as described above. The model 760 can refer to the model artifact that is created by the training engine 722 using the training data that includes training inputs and/or corresponding target outputs (correct answers for respective training inputs). The training engine 722 can find patterns in the training data that map the training input to the target output (the answer to be predicted), and provide the model 760 that captures these patterns. The model 760 can be composed of, e.g., a single level of linear or non-linear operations (e.g., a support vector machine (SVM or may be a deep network, i.e., a machine learning model that is composed of multiple levels of non-linear operations). An example of a deep network is a neural network with one or more hidden layers, and such a machine learning model may be trained by, for example, adjusting weights of a neural network in accordance with a backpropagation learning algorithm or the like.

In some embodiments, training engine 722 can first pre-train the AI model 760 on a corpus of text (e.g., generated by or accessible to training set generator 712 and/or training engine 722) to create a foundational model, and afterwards fine-tuned on more data pertaining to a particular set of tasks to create a more task-specific, or targeted, model. The foundational model can first be pre-trained using a corpus of text that can include text context in the public domain, licensed content, and/or proprietary content. Such a pre-training can be used by the model to learn broad language elements including general sentence structure, common phrases, vocabulary, natural language structure, and any other elements commonly associated with natural language in a large corpus of text. In some embodiments, this first, foundational model can be trained using self-supervision, or unsupervised training on such datasets.

In some embodiments, the AI model 760 can then be further trained and/or fine-tuned on organizational data, including proprietary organizational data. The AI model 760 can also be further trained and/or fine-tuned on organizational data associated with a virtual meeting 160 and/or other documents, including proprietary organizational data associated with a virtual meeting 160 and/or other documents.

In some embodiments, the second portion of training, including fine-tuning, may be unsupervised, supervised, reinforced, or any other type of training. In some embodiments, this second portion of training may include some elements of supervision, including learning techniques incorporating human or machine-generated feedback, undergoing training according to a set of guidelines, or training on a previously labeled set of data, etc. In a non-limiting example associated with reinforcement learning, the outputs of the AI model 760 while training may be ranked by a user, according to a variety of factors, including accuracy, helpfulness, veracity, acceptability, or any other metric useful in the fine-tuning portion of training. In this manner, the AI model 760 can learn to favor these and any other factors relevant to users within an organization, or associated with a virtual meeting, when generating a response. In such a way, a foundational model can be further trained to perform within a virtual meeting, and provide useful information, as well as help to accomplish useful tasks associated with the virtual meeting.

In some embodiments, the AI model 760 may include one or more pre-trained models, or fine-tuned models. In a non-limiting example, in some embodiments, the goal of the "fine-tuning" may be accomplished with a second, or third, or any number of additional models. For example, the outputs of the pre-trained model may be input into a second AI model that has been trained in a similar manner as the "fine-tuned" portion of training above. In such a way, two more AI models may accomplish work similar to one model that has been pre-trained, and then fine-tuned.

In one embodiment, the AI model 760 may be one or more of decision trees, random forests, support vector machines, or other types of machine learning models. In one embodiment, the AI model 760 may be one or more artificial neural networks (also referred to simply as a neural network). The artificial neural network may be, for example, a convolutional neural network (CNN) or a deep neural network. In one embodiment, processing logic performs supervised machine learning to train the neural network.

Artificial neural networks generally include a feature representation component with a classifier or regression layers that map features to a target output space. A convolutional neural network (CNN), for example, hosts multiple layers of convolutional filters. Pooling is performed, and non-linearities may be addressed, at lower layers, on top of which a multi-layer perceptron is commonly appended, mapping top layer features extracted by the convolutional layers to decisions (e.g., classification outputs). The neural network may be a deep network with multiple hidden layers or a shallow network with zero or a few (e.g., 1-2) hidden layers. Deep learning is a class of machine learning algorithms that use a cascade of multiple layers of nonlinear processing units for feature extraction and transformation. Each successive layer uses the output from the previous layer as input. Neural networks may learn in a supervised (e.g., classification) and/or unsupervised (e.g., pattern analysis) manner. Some neural networks (e.g., such as deep neural networks) include a hierarchy of layers, where the different layers learn different levels of representations that correspond to different levels of abstraction. In deep learning, each level learns to transform its input data into a slightly more abstract and composite representation.

In some embodiments, the AI model 760 may be one or more recurrent neural networks (RNNs). An RNN is a type of neural network that includes a memory to enable the neural network to capture temporal dependencies. An RNN is able to learn input-output mappings that depend on both a current input and past inputs. The RNN will address past and future measurements and make predictions based on this continuous measurement information. One type of RNN that may be used is a long short term memory (LSTM) neural network.

As indicated above, the AI model 760 may be one or more generative AI models, allowing for the generation of new and original content. The generative AI model can use other machine learning models including an encoder-decoder architecture including one or more self-attention mechanisms, and one or more feed-forward mechanisms. In some embodiments, the generative AI model can include an encoder that can encode input textual data into a vector space representation; and a decoder that can reconstruct the data from the vector space, generating outputs with increased novelty and uniqueness. The self-attention mechanism can compute the importance of phrases or words within a text data with respect to all of the text data. A generative AI model can also utilize the previously discussed deep learning techniques, including recurrent neural networks (RNNs), convolutional neural networks (CNNs), or transformer networks.

Validation engine 724 may be capable of validating a trained model 760 using a corresponding set of features of a validation set from training set generator 712. The validation engine 724 may determine an accuracy of each of the trained models 760 based on the corresponding sets of features of the validation set. The validation engine 724 may discard a trained model 760 that has an accuracy that does not meet a threshold accuracy. In some embodiments, the selection engine 726 may be capable of selecting a trained model 760 that has an accuracy that meets a threshold accuracy. In some embodiments, the selection engine 726 may be capable of selecting the trained model 760 that has the highest accuracy of the trained models 760.

The testing engine 786 may be capable of testing a trained model 760 using a corresponding set of features of a testing set from training set generator 712. For example, a first trained model 760 that was trained using a first set of features of the training set may be tested using the first set of features of the testing set. The testing engine 728 may determine a trained model 760 that has the highest accuracy of all of the trained machine learning models based on the testing sets.

As described herein, predictive component 752 of server 750 (or another component of meeting resource engine 156) may be configured to feed data as input to model 760 and obtain one or more outputs. In some embodiments, predictive component 752 can include or be associated with content engine 152.

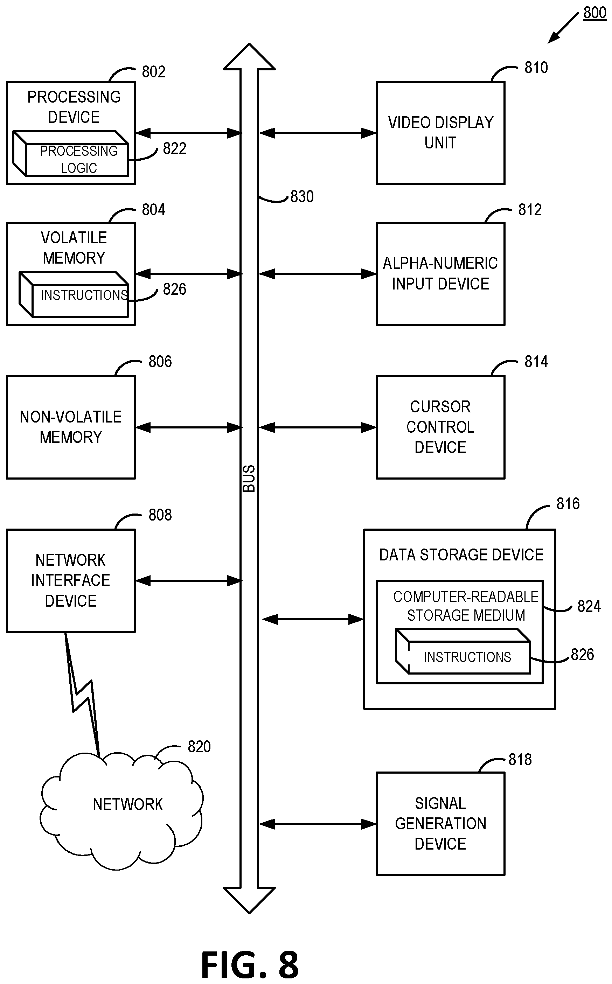

**FIG. 8** is a block diagram illustrating an example computer system 800, in accordance with implementations of the present disclosure. The computer system 800 can correspond to platform 120 and/or client devices 102A-N, described with respect to **FIG. 1****.** Computer system 800 can operate in the capacity of a server or an endpoint machine in an endpoint-server network environment, or as a peer machine in a peer-to-peer (or distributed) network environment. The machine can be a television, a personal computer (PC), a tablet PC, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 800 includes a processing device (processor) 802, a volatile memory 804 (e.g., read-only memory (ROM), flash memory, dynamic random access memory (DRAM) such as synchronous DRAM (SDRAM), double data rate (DDR SDRAM), or DRAM (RDRAM), etc.), a non-volatile memory 806 (e.g., flash memory, static random access memory (SRAM), etc.), and a data storage device 816, which communicate with each other via a bus 830.

Processor (processing device) 802 represents one or more general-purpose processing devices such as a microprocessor, central processing unit, or the like. More particularly, the processor 802 can be a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor 802 can also be one or more special-purpose processing devices such as an application specific integrated circuit (ASIC), a field programmable gate array (FPGA), a digital signal processor (DSP), network processor, or the like. The processor 802 is configured to execute processing logic 822 for performing the operations discussed herein.

The computer system 800 can further include a network interface device 808. The computer system 800 also can include a video display unit 810 (e.g., a liquid crystal display (LCD) or a cathode ray tube (CRT)), an input device 812 (e.g., a keyboard, and alphanumeric keyboard, a motion sensing input device, touch screen), a cursor control device 814 (e.g., a mouse), and a signal generation device 818 (e.g., a speaker).

The data storage device 816 can include a non-transitory machine-readable storage medium 824 (also computer-readable storage medium) on which is stored one or more sets of instructions 826 embodying any one or more of the methodologies or functions described herein. The instructions can also reside, completely or at least partially, within the volatile memory 804 and/or within the processor 802 during execution thereof by the computer system 800, the volatile memory 804 and the processor 802 also constituting machine-readable storage media. The instructions can further be transmitted or received over a network 820 via the network interface device 808.

In one implementation, the instructions 826 include instructions for providing fine-grained version histories of electronic documents at a platform. While the computer-readable storage medium 824 (machine-readable storage medium) is shown in an example implementation to be a single medium, the terms "computer-readable storage medium" and "machine-readable storage medium" should be taken to include a single medium or multiple media (e.g., a centralized or distributed database, and/or associated caches and servers) that store the one or more sets of instructions. The terms "computer-readable storage medium" and "machine-readable storage medium" shall also be taken to include any medium that is capable of storing, encoding or carrying a set of instructions for execution by the machine and that cause the machine to perform any one or more of the methodologies of the present disclosure. The terms "computer-readable storage medium" and "machine-readable storage medium" shall accordingly be taken to include, but not be limited to, solid-state memories, optical media, and magnetic media.

Reference throughout this specification to "one implementation," "one embodiment," "an implementation," or "an embodiment," means that a particular feature, structure, or characteristic described in connection with the implementation and/or embodiment is included in at least one implementation and/or embodiment. Thus, the appearances of the phrase "in one implementation," or "in an implementation," in various places throughout this specification can, but are not necessarily, referring to the same implementation, depending on the circumstances. Furthermore, the particular features, structures, or characteristics can be combined in any suitable manner in one or more implementations.

To the extent that the terms "includes," "including," "has," "contains," variants thereof, and other similar words are used in either the detailed description or the claims, these terms are intended to be inclusive in a manner similar to the term "comprising" as an open transition word without precluding any additional or other elements.

As used in this application, the terms "component," "module," "system," or the like are generally intended to refer to a computer-related entity, either hardware (e.g., a circuit), software, a combination of hardware and software, or an entity related to an operational machine with one or more specific functionalities. For example, a component can be, but is not limited to being, a process running on a processor (e.g., digital signal processor), a processor, an object, an executable, a thread of execution, a program, and/or a computer. By way of illustration, both an application running on a controller and the controller can be a component. One or more components can reside within a process and/or thread of execution and a component can be localized on one computer and/or distributed between two or more computers. Further, a "device" can come in the form of specially designed hardware; generalized hardware made specialized by the execution of software thereon that enables hardware to perform specific functions (e.g., generating interest points and/or descriptors); software on a computer readable medium; or a combination thereof.

The aforementioned systems, circuits, modules, and so on have been described with respect to interactions between several components and/or blocks. It can be appreciated that such systems, circuits, components, blocks, and so forth can include those components or specified sub-components, some of the specified components or sub-components, and/or additional components, and according to various permutations and combinations of the foregoing. Sub-components can also be implemented as components communicatively coupled to other components rather than included within parent components (hierarchical). Additionally, it should be noted that one or more components can be combined into a single component providing aggregate functionality or divided into several separate sub-components, and any one or more middle layers, such as a management layer, can be provided to communicatively couple to such sub-components in order to provide integrated functionality. Any components described herein can also interact with one or more other components not specifically described herein but known by those of skill in the art.

Moreover, the words "example" or "exemplary" are used herein to mean serving as an example, instance, or illustration. Any aspect or design described herein as "exemplary" is not necessarily to be construed as preferred or advantageous over other aspects or designs. Rather, the use of the words "example" or "exemplary" is intended to present concepts in a concrete fashion. As used in this application, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

Finally, implementations described herein include the collection of data describing a user and/or activities of a user. In one implementation, such data is only collected upon the user providing consent to the collection of this data. In some implementations, a user is prompted to explicitly allow data collection. Further, the user can opt-in or opt-out of participating in such data collection activities. In one implementation, the collected data is anonymized prior to performing any analysis to obtain any statistical patterns so that the identity of the user cannot be determined from the collected data.

## Claims

1. A method comprising:
receiving, by a set of one or more processing devices, a user query comprising a request to generate content in accordance with a content concept;
generating, by the set of one or more processing devices and based on the received user query, a prompt for an artificial intelligence (AI) model that is trained to perform operations associated with content generation, wherein the prompt comprises an expanded version of the request to generate the content in accordance with the content concept;
providing, by the set of one or more processing devices, the generated prompt as an input to the AI model;
obtaining, by the set of one or more processing devices, an output of the AI model, the output of the AI model comprising a set of one or more content items generated based on the expanded version of the request in accordance with the generated prompt and further based on existing content of one or more electronic documents associated with at least one of a user associated with the user query or the content concept; and
updating, by the set of one or more processing devices, a user interface (UI) of a client device associated with the user to include the set of one or more content items.

2. The method of claim 1, wherein each respective content item of the set of content items corresponds to a distinct content type, and wherein the prompt further comprises one or more instructions to perform operations associated with generating a respective content item having the corresponding distinct content type.

3. The method of claim 1 or 2, further comprising: receiving an additional user query comprising a request to modify one or more aspects of at least one content item of the set of content items; obtaining an updated version of the at least one content item that comprise the requested modification to the one or more aspects; and updating the UI of the client device to include the updated version of the at least one content item and one or more UI elements that enable the user to specify further modifications to the one or more aspects of the at least one content item.

4. The method of any of claims 1 to 3, wherein the UI of the client device is further updated to indicate the existing content of the one or more electronic documents for which the set of content items was generated.

5. The method of any of claims 1 to 4, further comprising: providing an indication of the one or more electronic documents as an additional input to the AI model.

6. The method of claim 5, further comprising: receiving an indication of the one or more electronic documents based on a user interaction of the UI of the client device.

7. The method of claim 5 or 6, further comprising: parsing a plurality of electronic documents associated with the user, the plurality of electronic documents comprising the one or more electronic documents; and based on the parsing, determining that the one or more electronic documents comprise the existing content, the existing content corresponding to the content concept.

8. The method of any of claims 1 to 7, wherein generating the prompt for the AI model comprises: providing an indication of the content concept as an input to an additional AI model that is trained to predict a content type of a content item corresponding to the content concept; obtaining one or more outputs of the additional AI model, the one or more outputs comprising an indication of the content type of the content item corresponding to the content concept; and updating the prompt to include an instruction to generate the content item, wherein the set of content items comprises the content item having the content type.

9. The method of any of claims 1 to 8, wherein the set of content items comprises at least one of a text content item, an image content item, an audio content item, an animation content item, or a video content item.

10. A system comprising: a memory; and a set of one or more processing devices coupled to the memory, wherein the set of one or more processing devices is configured to perform the method of any of claims 1 to 9.

11. Computer instructions, optionally stored on a non-transitory computer readable storage medium, that, when executed by a processing device, cause the processing device to perform the method of any of claims 1 to 9.
